# EUROPÄISCHE PATENTSCHRIFT

(11) **EP 1 519 890 B1**
(45) Veröffentlichungstag und Bekanntmachung des Hinweises auf die Patenterteilung: **26.10.2005**
(21) Anmeldenummer: 03807806.9
(22) Anmeldetag: 28.08.2003
(51) Int. Cl.: B66C 19/00

(54) **UMSCHLAGANLAGE UND VERFAHREN ZUM BE- UND ENTLADEN VON CONTAINERN AUS CONTAINERSCHIFFEN**
TRANSFER PLANT AND METHOD FOR LOADING AND UNLOADING CONTAINERS FROM CONTAINER SHIPS
INSTALLATION DE TRANSBORDEMENT ET PROCEDE DE CHARGEMENT ET DE DECHARGEMENT DE CONTENEURS SUR ET HORS DE NAVIRES PORTE-CONTENEURS

(30) Priorität: 12.09.2002 DE 10244116
(43) Veröffentlichungstag der Anmeldung: 06.04.2005
(73) Patentinhaber: Gottwald Port Technology GmbH, 40597 Düsseldorf (DE)
(72) Erfinder: FRANZEN, Hermann, 41238 Mönchengladbach (DE); KRÖLL, Joachim, 41363 Jüchen (DE)
(74) Vertreter: Moser & Götze
(86) Internationale Anmeldenummer: PCT/EP2003/009511
(87) Internationale Veröffentlichungsnummer: WO 2004/033356

(56) Entgegenhaltungen:
- US-A- 5 775 866
- US-A- 5 931 625
- PATENT ABSTRACTS OF JAPAN vol. 1999, no. 03, 31. März 1999 (1999-03-31) -& JP 10 330078 A (ISHIKAWAJIMA HARIMA HEAVY IND CO LTD), 15. Dezember 1998 (1998-12-15)
- PATENT ABSTRACTS OF JAPAN vol. 2000, no. 01, 31. Januar 2000 (2000-01-31) -& JP 11 278790 A (ISHIKAWAJIMA HARIMA HEAVY IND CO LTD), 12. Oktober 1999 (1999-10-12)
- PATENT ABSTRACTS OF JAPAN vol. 2000, no. 08, 6. Oktober 2000 (2000-10-06) -& JP 2000 143154 A (ISHIKAWAJIMA HARIMA HEAVY IND CO LTD), 23. Mai 2000 (2000-05-23)

## Beschreibung

Die Erfindung betrifft eine Umschlaganlage, insbesondere zum Be- und Entladen von Containern aus Containerschiffen in Seehäfen, mit einer sich landseitig abstützenden Vertikalstütze, an der ein Horizontalausleger abgespannt ist, der seeseitig das zu entladende Schiff überkragt und an dem eine Horizontaltransportvorrichtung verfahrbar ist, die mit land- und seeseitigen sowie an dem Horizontalausleger angeordneten Hub- und Senkeinrichtungen zum Aufnehmen und Absetzen der Container zusammenwirkt.

Auch betrifft die Erfindung ein Verfahren zum Be- und Entladen von Containern aus Containerschiffen in Seehäfen unter Verwendung der vorgenannten Umschlaganlage.

Eine Containerumschlaganlage mit den vorstehend beschriebenen Merkmalen ist beispielsweise aus der DE 40 40 072 A1 bekannt. Mit der bekannten Lösung wird versucht, den Zeitverlust beim Be- und Entladen von Containerschiffen möglichst gering zu halten, der bei vollem Ausfahren des Hubweges beim Be- und Entladen der Container entsteht Es wurde erkannt, dass die Umschlaggeschwindigkeit einer bekannten Anlage deutlich verkürzt werden kann, wenn die Hub- und Senkwege entsprechend verkürzt werden.

Gelöst wurde das Problem beim Stand der Technik dadurch, dass für den horizontalen Schwertransport in einer derartigen Verladebrücke ein Transportwagen verwendet wird, dessen Tragplattform durch längenverstellbare Tragelemente höhenverstellbar ist, so dass die Tragplattform optimal zu den Höhen der Lastübergabe eingestellt werden kann.

Die Heb- und Senkvorgänge stellen jedoch nur einen Zeitverlust von mehreren dar, ein Hauptkriterium für die Umschlagleistung der Containerbrücke ist vor allem die Zeitdauer für ein Lastspiel der Laufkatze. Bei zunehmender Schiffsgröße und der daraus resultierenden Schiffsbreite wird der wasserseitige Ausleger und damit der horizontale Fahrweg der Katze immer länger, was auch durch höhere Katzfahrgeschwindigkeiten nicht ausgeglichen werden kann. Die zurzeit in Containerbrücken realisierten maximalen Katzfahrgeschwindigkeiten von etwa 4 m/s bewegen sich in einer für den Kranfahrer gerade noch zumutbaren Größenordnung; eine weitere Steigerung der Katzfahrgeschwindigkeit ist kaum umsetzbar.

Aufgabe der vorliegenden Erfindung ist es daher eine neuartig konzipierte Umschlaganlage, und ein Verfahren zum Be- und Entladen von Containern, vorzugsweise von ISO-Containem, aus Containerschiffen in Seehäfen zu schaffen, mit denen die Umschlagleistung deutlich erhöht werden kann und damit die Liegezeiten der Containerschiffe am Kai erheblich reduziert werden können. Gleichzeitig soll sichergestellt werden, dass der Kranfahrer nicht mehr den großen Belastungen ausgesetzt ist, die durch die hohen Beschleunigungen und Verzögerungen und die hohen Fahrgeschwindigkeiten bei den Katzfahrten auftreten. Vor allem ist es ein Ziel der vorliegenden Erfindung den überwiegenden Teil des Entlade- bzw. Beladevorganges automatisch durchzuführen.

Die Aufgabe wird durch eine Umschlaganlage mit den Merkmalen des Anspruches 1 gelöst. In Bezug auf das Verfahren zum Be- und Entladen von Containern wird eine Lösung im Anspruch 15 angegeben. Die Unteransprüche 2 bis 14 und 16 und 17 betreffen vorteilhafte Ausgestaltungen der Erfindung.

Zur Lösung der Aufgabe wird erfindungsgemäß vorgeschlagen, dass bei einer Umschlaganlage, insbesondere zum Be- und Entladen von Containern aus Containerschiffen in Seehäfen, mit einer sich landseitig abstützenden Vertikalstütze, an der ein Horizontalausleger abgespannt ist, der seeseitig das zu entladende Schiff überkragt und an dem eine Horizontaltransportvorrichtung verfahrbar ist, die mit land- und seeseitigen sowie an dem Horizontalausleger angeordneten Hub- und Senkeinrichtungen zum Aufnehmen und Absetzen der Container zusammenwirkt, eine Erhöhung der Umschlagleistung dadurch erreicht wird, dass an dem Horizontalausleger mindestens zwei nebeneinander angeordnete Horizontaltransportvorrichtungen angeordnet sind, die unabhängig voneinander zwischen den land- und seeseitigen Hub- und Senkeinrichtungen an dem Horizontalausleger entlang verfahrbar sind.

In vorteilhafter Ausgestaltung der Erfindung sind an dem Horizontalausleger jeweils im Bereich der land- und/oder seeseitigen Hub- und Senkeinrichtungen Zwischenspeichervorrichtungen angeordnet, in die Container von den land- oder seeseitigen Hub- und Senkeinrichtungen sowie den Horizontaltransportvorrichtungen abstellbar oder von diesen aufnehmbar sind. Hierdurch wird eine Entkoppelung der Förderbewegungen der Hub- und Senkeinrichtungen und der Horizontaltransportvorrichtungen erreicht und hierdurch eine Optimierung der Umschlagleistung erreicht.

Besonders vorteilhaft ist vorgesehen, dass der Horizontalausleger in einen seeseitigen starren Basisausleger, einen daran angeschlossenen seeseitigen Schwenkausleger und einen landseitigen auskragenden starren Ausleger unterteilt ist, der seeseitige starre Basisausleger und der landseitige starre Ausleger an der Vertikalstütze befestigt sind und der seeseitige starre Basisausleger in der Ruheposition der Umschlaganlage, in der der seeseitige Schwenkausleger nach oben geschwenkt ist, die seeseitige Hub- und Senkeinrichtung aufnimmt.

Im Wesentlichen wird die Erhöhung der Umschlagleistung der Umschlaganlage, dadurch erreicht, dass der seeseitige Teil des Horizontalauslegers eine Schienenfahrbahn für eine Katze der seeseitigen Hub- und Senkeinrichtung trägt, an dem landseitigen Teil des Horizontalauslegers die landseitige Hub- und Senkeinrichtung befestigt ist und beidseitig neben der Schienenfahrbahn der seeseitigen Heb- und Senkeinrichtung und neben der landseitigen Hub- und Senkeinrichtung und somit im Wesentlichen entlang des gesamten Horizontalausleger Schienenfahrbahnen für die Horizontaltransportvorrichtungen angeordnet sind.

Eine kompakte, insbesondere schmale Bauweise der Umschlaganlage wird dadurch erreicht beziehungsweise beibehalten, dass die Vertikalstütze in der Art turmartig ausgebildet ist, dass die Schienenfahrbahn für die Hub- und Senkeinrichtung im Bereich der Vertikalstütze endet und dass die Schienenfahrbahnen für die Horizontaltransportvorrichtungen seitlich an der Vertikalstütze vorbei verlaufen.

In vorteilhafter Ausgestaltung der Erfindung umfassen die Zwischenspeichervorrichtungen jeweils eine sich nach unten erstreckende Tragsäule, an deren unterem Ende sich ein horizontaler Schwenkarm anschließt, auf dessen der Tragsäule abgewandten Ende schwenkbar ein Tragrahmen befestigt ist, der zum Aufnehmen oder Abgeben eines Containers sowohl in den Bereich unterhalb der seeseitigen beziehungsweise landseitigen Hub- und Senkeinrichtung wie in den Bereich der beiden Horizontaltransportvorrichtungen in entsprechende Übernahme- bzw. Übergabepositionen verschwenkbar ist.

Der seeseitige Schwenkarm und der seeseitige Tragrahmen sind jeweils unabhängig voneinander um mindestens ± 90° um ihre vertikalen Achsen verschwenkbar sind.

Demgegenüber sind in vorteilhafter Weise die Verschwenkeinrichtung des landseitigen Tragarmes und/oder des landseitigen Tragrahmens durch ein parallelogrammartiges Koppelgetriebe derartig antreibbar sind, dass die Ausrichtung des Containers während der Verschwenkbewegung unverändert bleibt

Besonders vorteilhaft ist, dass der Tragrahmen für den Container zwischen den beiden Übernahme- bzw. Übergabepositionen im Bereich der Schienenfahrbahnen in eine zentrale Schwenkstellung verschwenkbar ist, in der der Container mit der seeseitigen beziehungsweise der landseitigen Hub- und Senkeinrichtung verbindbar oder von diesem lösbar ist.

In vorteilhafter Ausgestaltung bestehen die Horizontaltransportvorrichtungen jeweils aus einem Rahmen mit einem auf den Schienenfahrbahnen verfahrbaren Schienenfahrwerk, einem Hubwerk und einem Spreader zur Aufnahme des unter den Spreader geschwenkten und positionierten Containers.

Eine stabile Führung der Hubtraverse der landseitige Hub- und Senkvorrichtung wird dadurch erreicht, dass diese als an der Vertikalstütze geführter Lift ausgebildet ist. Dieser Lift besteht aus einer an einem horizontalen Hubtraverse geführten Katze mit einem Lastaufnahmemittel für den Container, wobei der Hubtraverse an Hubseilen aufgehängt und gelenkig mit einer Traverse an einer Rollenführung verbunden ist, die an der Vertikalstütze abrollbar geführt ist

Zur mindestens teilweisen Kompensation des Eigengewichtes der landseitigen Hub- und Senkvorrichtung ist vorgesehen, dass die Hubseile der landseitigen Hub- und Senkvorrichtung mit einem mobilen Gegengewicht gekoppelt sind.

Als Schnittstelle zu einem horizontalen Transportsystem ist unterhalb der landseitigen Hub- und Senkvorrichtung eine Ladestation angeordnet, die zwei wechselweise unter die Hub- und Senkeinrichtung verfahrbare Übemahmebeziehungsweise Übergabepositionen aufweist.

Gemäß einem weiteren Merkmal zeichnet sich die Umschlaganlage dadurch aus, dass die Umschlaganlage einen portalartigen, auf Schienenfahrwerken abgestützten Unterbau aufweist, der Ausleger landseitig über den Unterbau hinausragt und auf dem Unterbau sich landseitig zentral die Vertikalstütze abstützt

Ein Arbeitsverfahren zum Entladen und Beladen von Containern aus Containerschiffen mittels einer vorstehend beschriebenen Umschlaganlage, ist gekennzeichnet durch die Abfolge der folgenden Arbeitsschritte:
a) zum Entladen aus einem an einem Kai festgemachten Containerschiff wird ein Container von einem Spreader der über dem Container am Horizontalausleger positionierten seeseitigen Hub- und Senkeinrichtung aufgenommen und auf eine maximale Hubhöhe angehoben,
b) die an der seeseitigen Hub- und Senkeinrichtung angeordnete Zwischenspeichervorrichtung mit einem horizontal schwenkbaren Tragarm und einem hieran angeordneten horizontal schwenkbaren Tragrahmen wird aus ihrer Ruheposition unterhalb einer Schienenfahrbahn der beiden Horizontaltransport-vorrichtungen in eine Position unterhalb des Containers geschwenkt,
c) der Container wird auf den Tragrahmen abgesetzt und mit diesem unter eine der beiden Schienenfahrbahnen der Horizontaltransportvorrichtungen verschwenkt,
d) eine der über dem Container auf dem Tragrahmen positionierte Horizontaltransportvorrichtung übemimmt den Container und transportiert ihn zum Ende des landseitigen Auslegers, während die seeseitige Hub- und Senkeinrichtung einen neuen Container aufnimmt,
e) am landseitigen Ende des Auslegers wird der Container auf einen Tragrahmen einer zweiten eine sich nach unten erstreckende Tragsäule aufweisende Zwischenspeichereinrichtung übergeben, der mit einem horizontalen Schwenkarm in den Bereich der Schienenfahrbahnen der Horizontaltransportvorrichtungen unterhalb des Containers verschwenkt wurde,
f) nach Lösen des Containers von der Horizontaltransportvorrichtung wird der Tragrahmen mit dem Container unter das Hubwerk der am landseitigen Ausleger angelenkten Hub- und Senkeinrichtung verschwenkt, wo der Container von einem Spreader aufgenommen wird,
g) nach Zurückschwenken des Tragrahmens wird der Container mit der Hub- und Senkeinrichtung abgesenkt und an ein horizontales Transportsystem am Boden übergeben,
h) zeitgleich mit den vorstehend beschriebenen Arbeitsschritten wird ein von der seeseitigen Hub- und Senkvorrichtung aufgenommener zweiter Container mit der zweiten Horizontaltransportvorrichtung über deren jeweils andere Schienenfahrbahn zum landseitigen Auslegerende transportiert und dort in gleicher Weise manipuliert und
i) zum Beladen die vorgenannten Arbeitsschritte in umgekehrter Reihenfolge ausgeführt werden.

Das erfindungsgemäße Verfahren ist weiterhin dadurch gekennzeichnet, dass der beim Aufnehmen von der ersten Heb- und Senkeinrichtung quer zur Auslegerlängsachse ausgerichtete Container durch Verschwenken des Tragarmes und/oder Tragrahmens um +/- 90° in eine vorher bestimmte Lage parallel zum Ausleger verschwenkt wird. Wie bereits vorstehend beschrieben dient diese Ausrichtung der exakten Positionierung des Containers, beispielsweise Containertür in Richtung Landseite.

In einer weiteren günstigen Ausgestaltung des erfindungsgemäßen Verfahrens wird vorgeschlagen, dass sich der beim Absetzen auf dem Tragrahmen der zweiten sich nach unten erstreckenden Tragsäule parallel zum Ausleger ausgerichtete Container beim Verschwenken in den Bereich der Vertikalvorrichtung durch gegenläufige Bewegungen von Tragarm und Tragrahmen in seiner Ausrichtung nicht verändert.

Wenn mit den vorstehenden Merkmalen und Arbeitsschritten das Entladen von Containern mit Hilfe der erfindungsgemäßen Umschlaganlage beschrieben wurde, wird ausdrücklich darauf hingewiesen, dass es ebenfalls zum Wesen der vorliegenden Erfindung gehört, die vorstehend beschriebenen Arbeitsschritte in umgekehrter Reihenfolge ablaufen zu lassen, um ein Schiff mit Containern zu beladen.

Mit der vorstehend beschriebenen Umschlaganlage wird die Umschlagleistung einer Containerbrücke deutlich gesteigert. Durch die gesteigerte Umschlagleistung kann die Liegezeit eines Containerschiffs am Kai und damit unmittelbar die Liegekosten um ca. 30 - 35% reduziert werden. Der überwiegende Teil des Entlade- bzw. Beladevorganges kann erfindungsgemäß automatisch betrieben werden, indem die vorstehend beschriebenen Verfährenabläufe in entsprechender Weise und in der richtigen Abfolge gesteuert werden.

Die Funktionsweise der vorliegenden Erfindung und deren Vorteile werden am besten anhand der Zeichnung beschrieben und erläutert.

Es zeigt:
- Figur 1: eine Seitenansicht der Umschlaganlage,
- Figur 2: eine Draufsicht auf die Umschlaganlage,
- Figur 3: eine Vorderansicht der Umschlaganlage,
- Figur 4: eine rückwärtige Ansicht der Umschlaganlage,
- Figur 5: einen Ausschnitt der Seitenansicht an der Vertikaltransportvorrichtung,
- Figur 6: eine Draufsicht auf die Vertikalhubvorrichtung,
- Figur 7: ein Detail aus Fig. 1,
- Figur 8: ein Detail aus Fig. 3,
- Figur 9: ein weiteres Detail aus Fig. 1,
- Figuren 10a, b: Schema der Schwenkeinrichtung und des Schwenkvorganges,
- Figur 11: Schema der Schwenkeinrichtung und des Schwenkvorganges,
- Figur 12: eine rückwärtige Ansicht der Umschlaganlage und
- Figur 13: eine Darstellung des Kranes außer Betrieb.

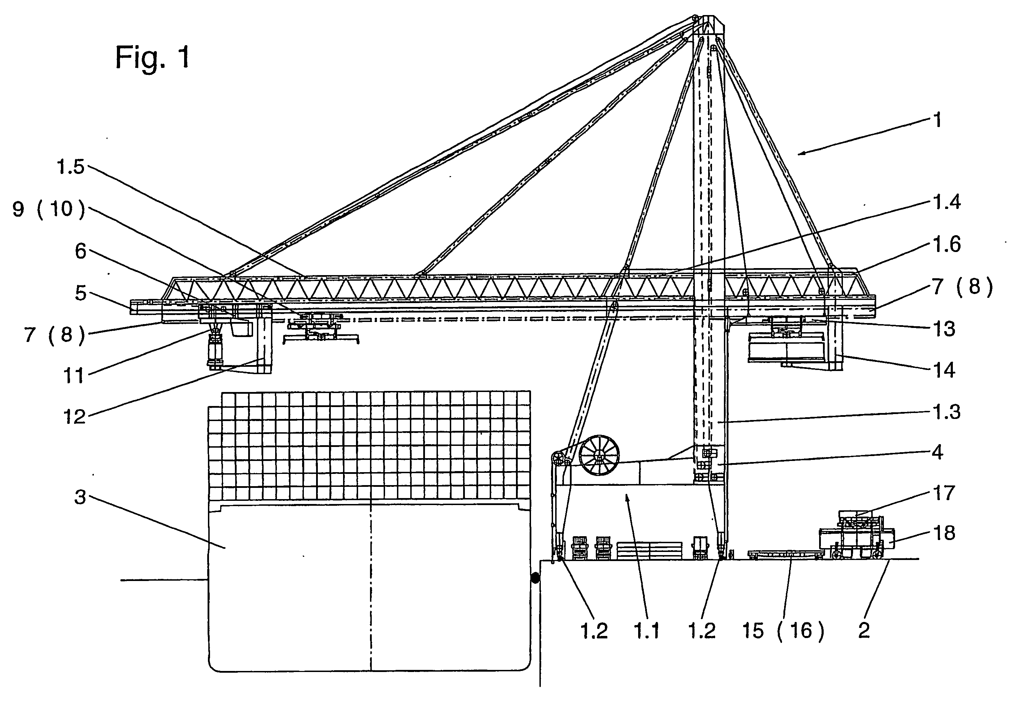

In der Figur 1 ist eine Umschlaganlage 1 mit einem vor einem Kai 2 liegenden Containerschiff 3 dargestellt. Die Umschlaganlage 1 besteht hauptsächlich aus einem Portal 1.1, das sich mit vier mehrrädrigen Schienenfahrwerken 1.2 auf dem Kai abstützt, aus einer turmartigen Vertikalstütze 1.3 und einen hieran befestigten horizontalen Ausleger 1.4, 1.5 und 1.6. Dieser Ausleger besteht aus einem starren seeseitigen Basisausleger 1.4, einem hieran gelagerten seeseitigen Schwenkausleger 1.5 sowie einem starren landseitigen Ausleger 1.6.

Die Seilwinden und Antriebsanlage 4 der Umschlaganlage sind im landseitigen Querträger 1.7 des Portals 1.1 angeordnet Die beiden seeseitigen Ausleger 1.4 und 1.5 tragen an deren Unterseite auf einer oberen Ebene eine Schienenfahrbahn 5 für eine Katze 6 und jeweils seitlich davon auf einer unteren Ebene mindestens eine Schienenfahrbahn 7 und 8 für je eine Horizontaltransportvorrichtung 9 und 10. Die Schienenfahrbahn 5 der Katze 6 endet an der Vertikalstütze 1.3, die Schienenfahrbahnen 7 und 8 ist jedoch seitlich an der Vertikalstütze 1.3 vorbei bis zum Ende des landseitigen Auslegers 1.6 fortgeführt. Die Katze 6 enthält zusätzlich zu einem konventionellen Seilhubwerk einer Hub- und Senkeinrichtung 11 für Container 18 eine Schwenkeinrichtung 12 für den Container 18.

Auf der landseitig zugewandten Seite der turmartigen Vertikalstütze 1.3 befinden sich eine weitere Vertikalhubvorrichtung 13, die auch wie die Heb- und Senkeinrichtung 11 eine Schwenkeinrichtung 14 aufweist. Unterhalb der Vertikalhubeinrichtung 13 erkennt man auf dem Kai 2 zwei Containerladestationen 15 und 16 sowie ein fahrerloses Transportfahrzeug (FTF) 17 beim Abtransport eines Containers 18.

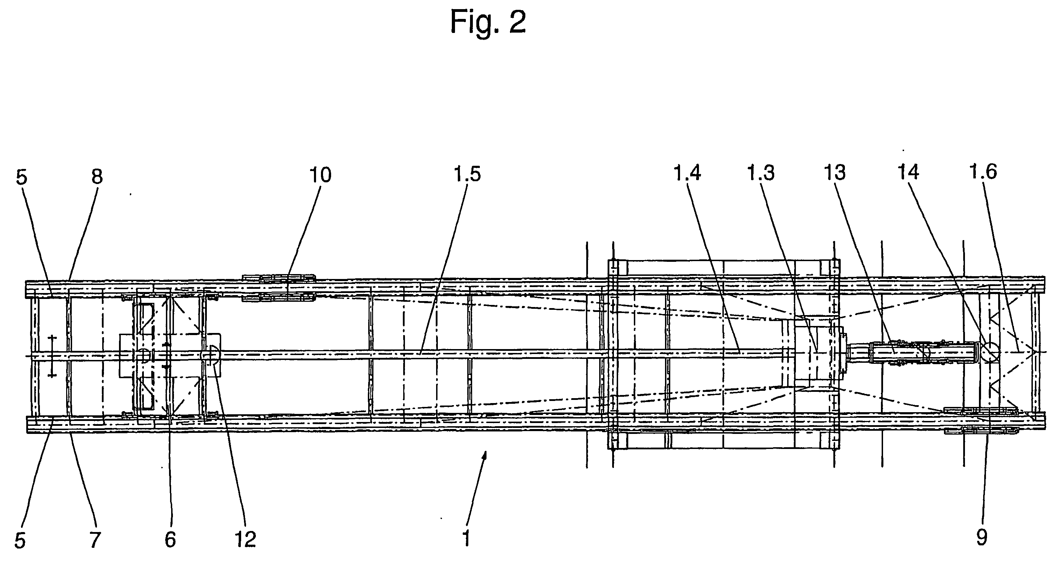

In Figur 2 sind gleiche Teile gleich bezeichnet. Die Figur 2 zeigt in einer Draufsicht der Umschlaganlage 1 mit ihrer Vertikalstütze 1.3, dem starren seeseitigen Basisausleger 1.4, dem hieran gelagerten seeseitigen Schwenkausleger 1.5 sowie dem starren landseitigen Ausleger 1.6. Erkennbar ist ebenfalls, dass die Schienenfahrbahnen 7 und 8 für die beiden Horizontaltransportvorrichtungen 9 und 10 seitlich neben der Schienenfahrbahn 5 der Katze 6 angeordnet sind und über die gesamte Länge des Auslegers 1.4, 1.5 und 1.6 verlaufen. Beim Übergang von dem seeseitigen Basisausleger 1.5 und dem landseitigen Ausleger 1.6 verlaufen die Schienenfahrbahnen 7 und 8 somit seitlich neben der zentralen Vertikalstütze 1.3. Die Vertikalstütze 1.3 ist auf der Mitte des landseitigen Querträgers 1.7 abgestützt und hat in Längsrichtung des Querträgers 1.7 gesehen eine Breite die etwas geringer ist als ein Drittel der Länge des Querträgers 1.7. Die turmartige Vertikalstütze 1.3 ist gegenüber den sonst rahmenförmigen Vertikalstützen mit zwei parallel zueinander und mit Abstand voneinander verlaufenden Vertikalträgern als sogenannter Monobeam also mit nur einem zentralen sowie den überwiegenden Teil der Last aufnehmenden Vertikalträger ausgebildet. Auch ist ersichtlich, dass die Vertikalhubvorrichtung 13 mit der Schwenkeinrichtung 14 in Bereich der Mitte des landseitigen Ausleger 1.6 und ortfest angeordnet sind.

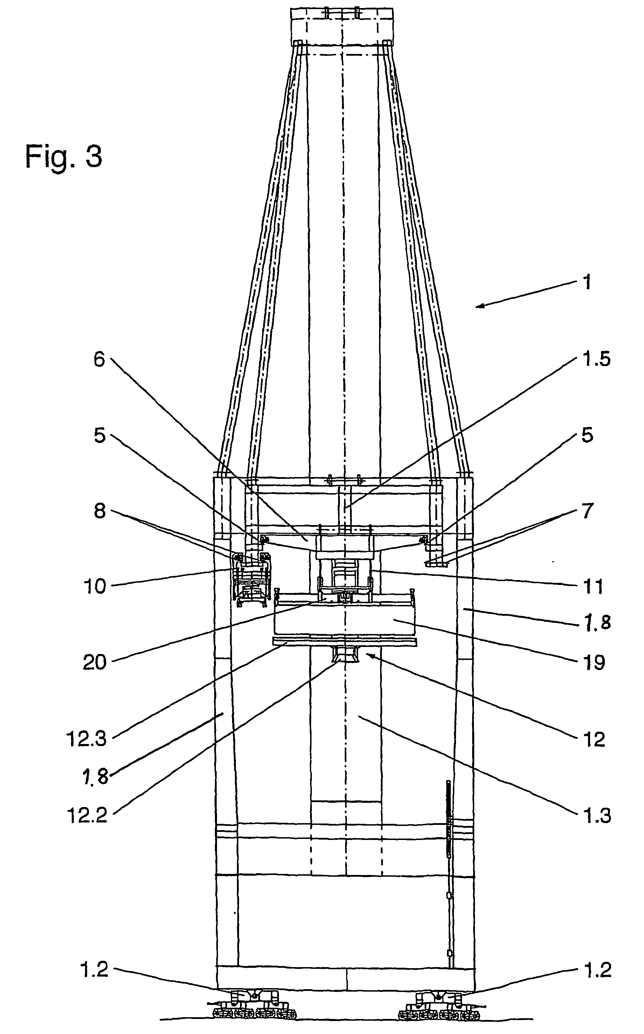

In Figur 3 ist eine Vorderansicht der erfindungsgemäßen Umschlaganlage dargestellt, d.h. in Blickrichtung von der Seeseite zum Kai 2. Zur Lastaufnahme eines weiteren Containers 19 ist die Hub- und Senkeinrichtung 11 mit einem Spreader 20 versehen. Die Schwenkeinrichtung 12 besteht aus einer Tragsäule 12.1 inklusive einen erstem nicht dargestellten Schwenkwerk, dem Schwenkarm 12.2 inklusive einem zweitem nicht dargestellten Schwenkwerk und einem Tragrahmen 12.3. Die Tragsäule 12.1 ist seitlich versetzt neben der Hub- und Senkeinrichtung 11 an der Katze 6 sowie zentral zwischen den beiden Schienenfahrbahnen 7 und 8 aufgehängt. An die vertikale Tragsäule 12.1 schließt sich über das nicht dargestellte Schwenkwerk der horizontal verlaufende und von der Tragsäule 12.1 aus seitlich auskragende Schwenkarm 12.2 an. An dem der Tragsäule 12.1 abgewandten Ende ist auf dem Schwenkarm 12.2 das zweite nicht dargestellte Schwenkwerk befestigt, das um eine vertikale Schwenkachse schwenkbar den Tragrahmen 12.3 trägt Der Tragrahmen 12.3 dient zur Aufnahme oder Übergabe eines Containers 19 von der beziehungsweise zu der Hub- und Senkeinrichtung 11. In der hier beschriebenen Figur 3 befindet sich der Schwenkarm 12.2 in der 0° Position, d.h. parallel zur Längsachse der Umschlaganlage 1 beziehungsweise deren Ausleger 1.4, 1.5 und 1.6. Der zum Schwenkarm 12.2 um 90° verschwenkte Tragrahmen 12.3 steht für die Aufnahme des Containers 19, der am Spreader 20 hängt, bereit.

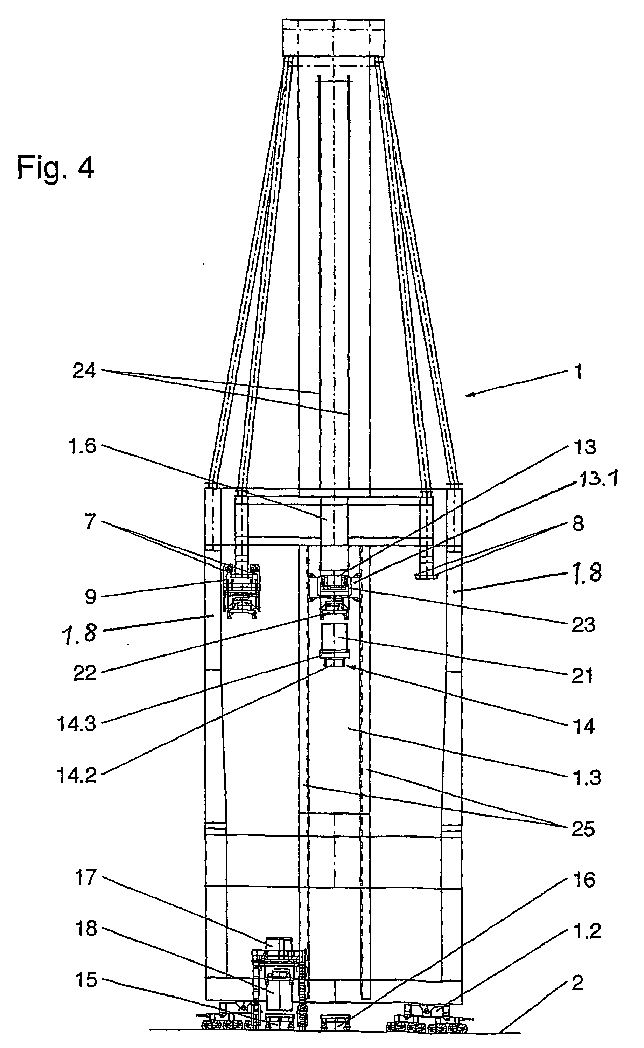

Die Figur 4 zeigt in der rückwärtigen Ansicht, d.h. in Blickrichtung vom Kai 2 zur See, die Umschlaganlage 1, die im Wesentlichen die Vertikalhubvorrichtung 13 mit der Schwenkeinrichtung 14 zeigt. Auch hier ist ein Spreader 22 erkennbar, der zur Lastaufnahme eines weiteren Containers 21 dient und an über eine Katze 23 an einer Hubtraverse 13.1 der Vertikalhubeinrichtung 13 aufgehängt ist. Die Katze 23 ist entlang der Hubtraverse 13.1 verfahrbar. Die Hubtraverse 13.1 ist über Lastseile 24, die im Bereich des oberen Endes der Vertikalstütze 1.3 ungelenkt an einem nicht dargestellten und auf dem Querträger 1.7 angeordneten Hubwerk angeschlagen. Für eine stabile Führung der Hubtraverse 13.1 sorgen die beiden Führungsbahnen 25, die vertikal und parallel zur Vertikalstütze 1.3 verlaufen. Die Schwenkeinrichtung 14 besteht wie die Schwenkeinrichtung 12 aus einer Tragsäule 14.1 inklusive eines Schwenkwerkes, einem Schwenkarm 14.2 und einem Tragrahmen 14.3 für den Container 21. Der Aufbau und die Funktionsweise der Schwenkeinrichtung 14 stimmt mit der der Schwenkeinrichtung 12 überein. Es wird daher Bezug auf die entsprechende Beschreibung der Schwenkeinrichtung 12 genommen. In der hier dargestellten Skizze befindet sich der Schwenkarm 14.2 und der mit dem Container 21 beladene Tragrahmen 14.3 in der 0° Position, d.h. parallel zur Längsachse der Umschlaganlage 1. Auch hier erkennt man unterhalb der Vertikalhubvorrichtung 13 auf dem Kai 2 die beiden Ladestationen 15 und 16 sowie ein FTF 17 beim Abtransport des Containers 18.

Des Weiteren ist aus den Figuren 3 und 4 ersichtlich, dass unter der erfindungsgemäßen Bezeichnung der Vertikalstütze 1.3 als turmartig zu verstehen ist, dass der Ausleger 1.4, 1.5, 1.6 im Wesentlichen von einer einzigen Vertikalstütze 1.3 getragen wird, die zentral zu der Breite des Auslegers 1.4, 1.5, 1.6 angeordnet ist Die beidseitig seitlich neben der Vertikalstütze 1.3 angeordneten Hilfsstützen 1.8 haben in Bezug auf die Vertikalstütze 1.3 nur eine stabilisierende Funktion. Die Hilfsstützen 1.8 erstrecken sich von der Oberseite des Portals 1.1 bis zu den Auslegern 1.4, 1.6. Die Figuren 3 und 4 zeigen deutlich, dass auf Grund ihrer Funktion die Hilfsstützen 1.8 im Vergleich zu der Vertikalstütze 1.3 auch nur eine geringe Breite aufweisen und somit die Breite des Umschlaggerätes 1 nicht erhöhen, aber dennoch einen ausreichenden Freiraum zu der Vertikalstütze 1.3 belassen, um die Horizontaltransportvorrichtungen 9 und 10 sich mit den zu transportierenden Containern an den Hilfsstützen 1.8 vorbei bewegen zu lassen.

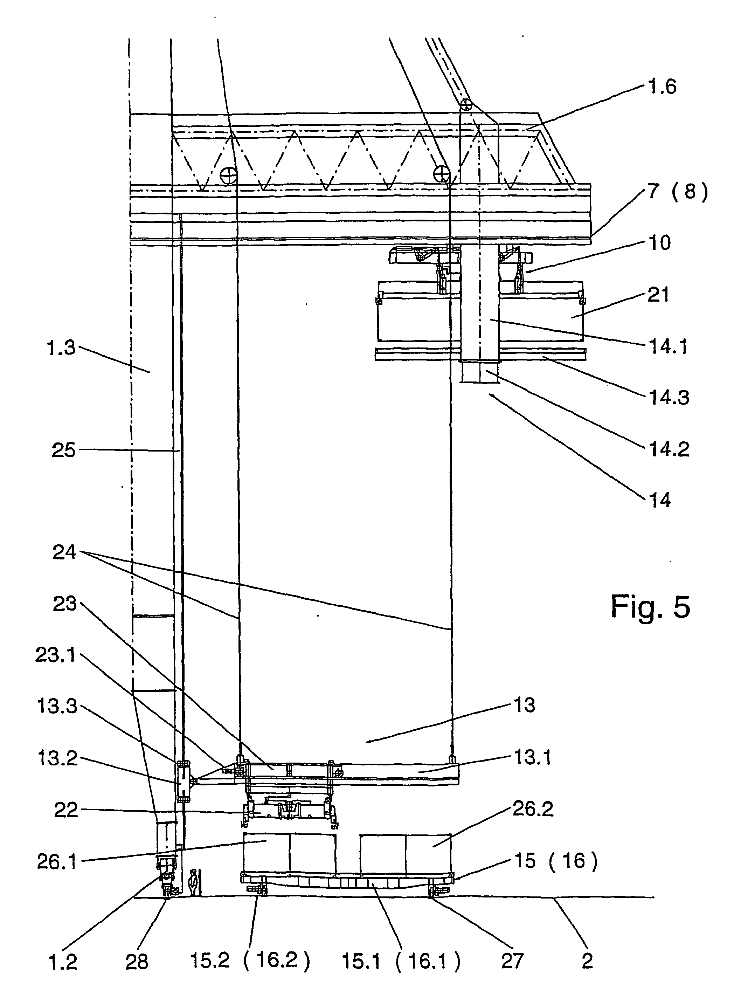

Die Figur 5 zeigt in der Seitenansicht das landseitige Ende der Umschlaganlage 1 in vergrößerter Darstellung. Der Schwenkarm 14.2 befindet sich in einer + 90° Position, d.h. rechtwinkelig zur Längsachse des landseitigen Auslegers 1.6, während der für den Container 21 aufnahmebereite Tragrahmen 14.3 in der 0° Position, d.h. parallel zur Längsachse und unterhalb der Schienenfahrbahn 8 positioniert ist. Zur Lastaufnahme eines Containers 26.1 dient der Spreader 22, der an der Hubtraverse 13.1 der Vertikalhubvorrichtung 13 aufgehängt ist. Die Vertikalhubvorrichtung 13 ist mit dem Längsträger 13.1 an den Lastseilen 24 angeschlagen. Für die stabile Lastführung sorgen die beiden Führungsbahnen 25, die parallel zur Vertikalstütze 1.3 verlaufen. Die Führungsbahnen 25 bilden Laufbahnen für die in einer Traverse beziehungsweise einem Balancier 13.2 gelagerten Führungsrollen 13.3. Der Balancier 13.2 gleicht hier eventuell vorhandene geringere Abweichungen in den Längen der Lastseile 24 aus.

In der Figur 5 ist eine Twinlift-Operation mit zwei 20ft-ISO-Container dargestellt Die für eine kurze horizontale Ausfahrbarkeit von etwa +/- 25 ft mit einem Schienenfahrwerk 23.1 ausgerüstete Katze 23 befindet sich in einer außermittigen Position oberhalb des im 45ft Raster gelagerten 20ft-Containers 26.1. Der auf das 20ft Anschlagmaß einteleskopierte Spreader 22 ist bereit für den ersten Lastumschlag. Im nächsten Hubvorgang wird der zweite 20ft Container 26.2 umgeschlagen. Die Containerladestationen 15 und 16 bilden als Lastübergabeeinrichtung die Schnittstelle zwischen der Vertikalhubvorrichtung 13 der Umschlaganlage 1 und im horizontalen Transportsystem mittels FTF's 17. Die Containerladestationen 15 und 16, bestehend aus einem Chassis 15.1 bzw. einem Chassis 16.2 und je zwei Schienenfahrwerken 15.2 und 16.2, sind auf Schienen 27, die auf dem Kai 2 parallel zu den Schienen 28 der Umschlaganlage 1 verlegt sind, horizontal verfahrbar.

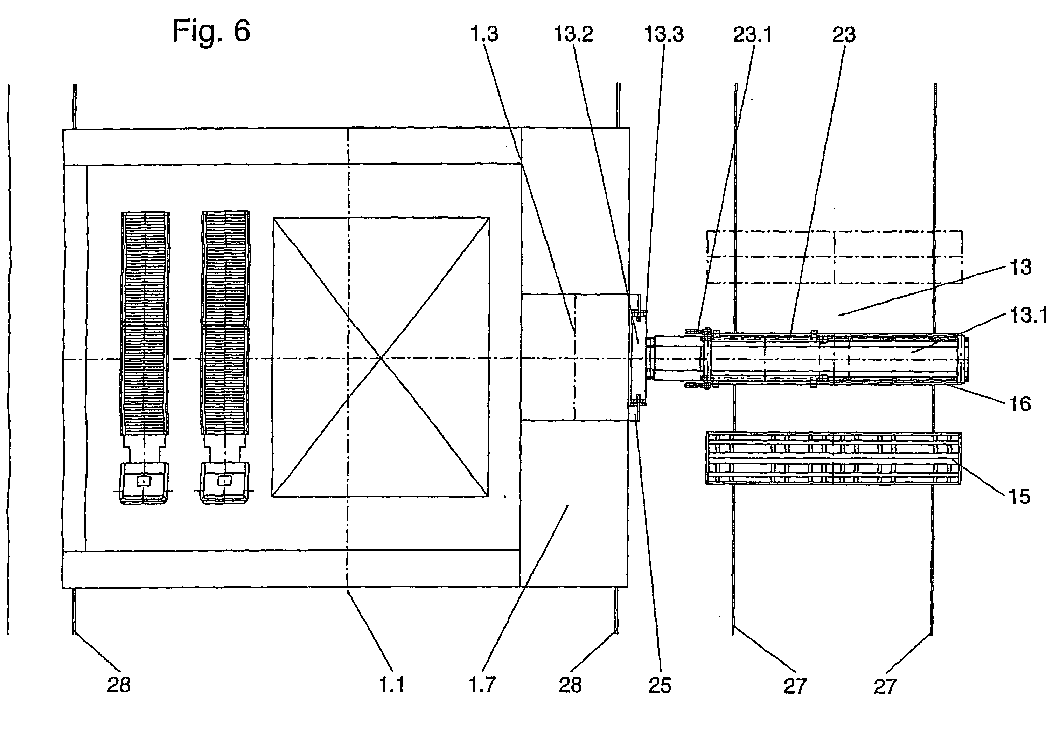

Die Figur 6 zeigt die Vertikalhubvorrichtung 13 in einer Draufsicht. Erkennbar ist das Portal 1.1, die Vertikalstütze 1.3, der landseitige Querträger 1.7, die Vertikalhubvorrichtung 13, der Längsträger 13.1, der Balancier 13.2, die Führungsrollen 13.3, die Katze 23 mit ihrem Schienenfahrwerk 23.1 und die beiden Führungsbahnen 25, die Containerladestationen 15 und 16 auf ihren Schienen 27, sowie die Schienen 28 der Umschlaganlage 1. Die beiden Containerladestationen 15 und 16 besetzen im Wechsel durch einen Horizontalversatz von etwa +/-6m, gesteuert und überwacht durch eine übergeordnete Terminallogik die insgesamt drei Positionen einmal unterhalb der Hub- und Senkeinrichtung 13 oder jeweils seitlich versetzten Positionen der beiden Übergabeplätze zu den FTF's 17.

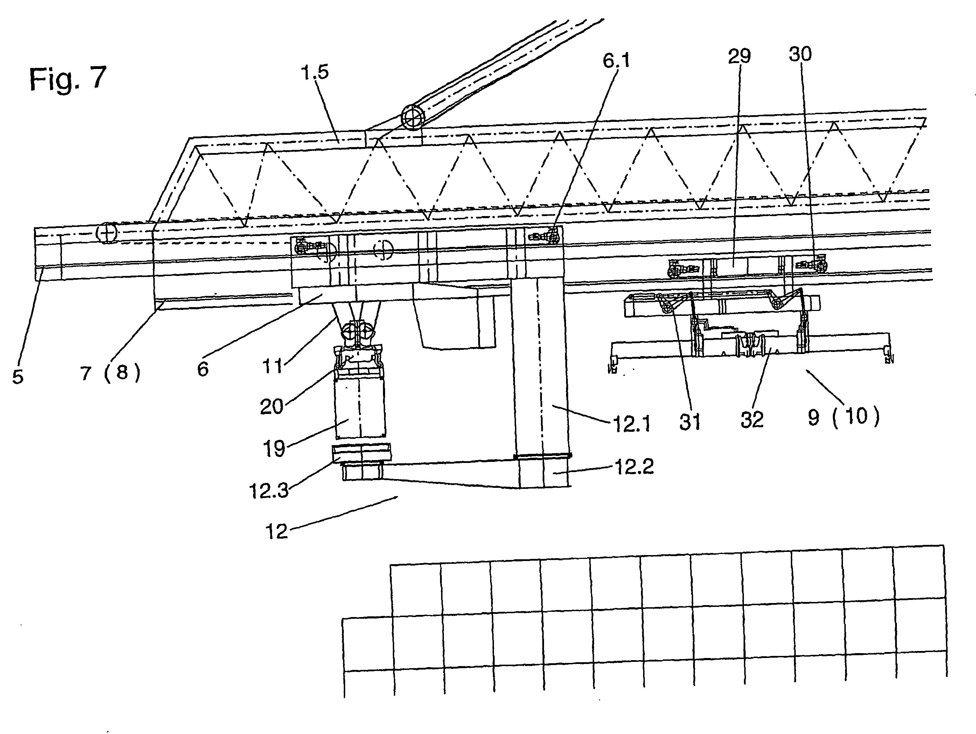

Figur 7 zeigt als Detail aus der Umschlaganlage 1 den seeseitigen Schwenkausleger 1.5, die Schienenfahrbahnen 5 der Katze 6 und seitlich davon auf einer unteren Ebene die Schienenfahrbahnen 7 und 8 für die beiden Horizontaltransportvorrichtungen 9 und 10. Weitere Bestandteile der Katze 6 sind das Schienenfahrwerk 6.1, das Seilhubwerk 11 und die Schwenkeinrichtung 12. Letztere besteht aus der Lagersäule 12.1 inklusive Schwenkwerk, dem Schwenkarm 12.2 inklusive Schwenkwerk und dem Tragrahmen 12.3. In der Zeichnungsdarstellung befindet sich der Schwenkarm 12.2 in der 0° Position, d. h. parallel zur Längsachse der Umschlaganlage 1. Der zum Schwenkarm um 90° versetzte Tragrahmen 12.3 unterhalb der Last steht für die Aufnahme des Containers 19, der am Spreader 20 hängt bereit. Die Horizontaltransportvorrichtungen 9 und 10 bestehen aus einer als Rahmen 29 bezeichneten Katze mit einem Schienenfahrwerk 30 und einem Hubwerk 31 mit einem daran aufgehängten Spreader 32.

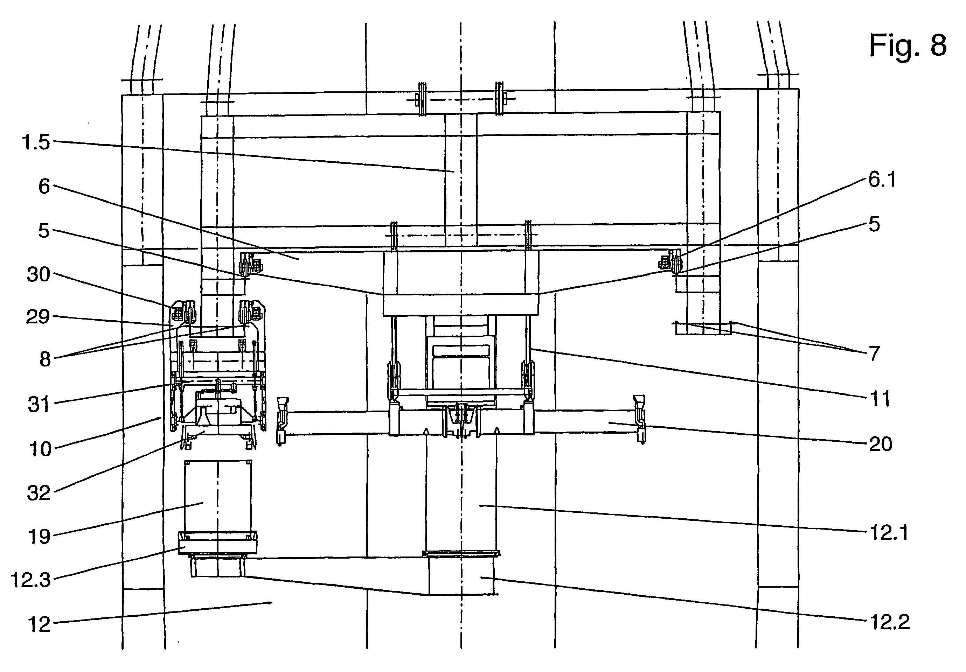

Die Figur 8 zeigt in einer weiteren Ansicht den seeseitigen Schwenkausleger 1.5 der Umschlaganlage 1. Die Schwenkeinrichtung 12 besteht aus der Lagersäule inklusive Schwenkwerk 12.1. In der Zeichnungsdarstellung befindet sich der Schwenkarm in der + 90° Position, d. h. um 90° verschwenkt zur Längsachse der Umschlaganlage 1. Der zum Schwenkarm um 90° verschwenkte Tragrahmen 12.3, beladen mit dem Container 19, befindet sich parallel zur Schienenfahrbahn 8. Der Spreader 32 ist zum Lastumschlag des Containers bereit. Das Seilhubwerk 11 der Katze 6 kann mit dem nächsten Hub beginnen.

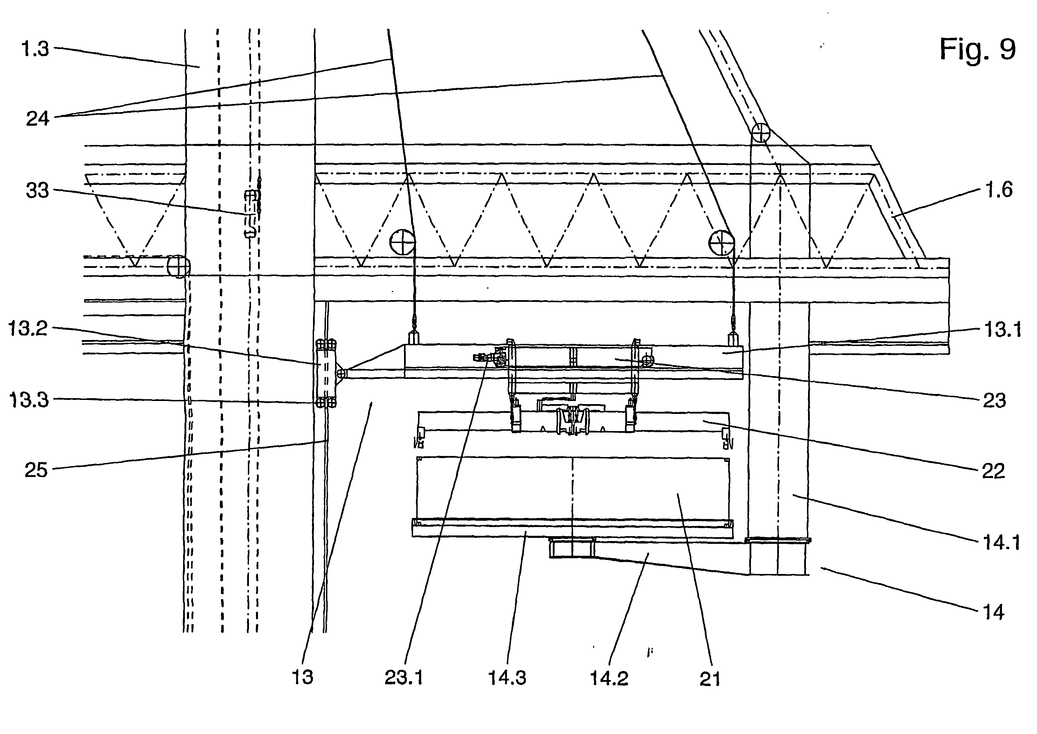

Die Figur 9 zeigt die Vertikalhubvorrichtung 13 auf der landseitig zugewandten Seite der Vertikalstütze 1.3 sowie die Schwenkeinrichtung 14. Der Schwenkarm 14.2 und der mit dem Container 21 beladenen Tragrahmen 14.3 befinden sich in einer 0° Position, d. h. parallel zur Längsachse des landseitigen Auslegers 1.6. Zur Lastübemahme des Containers 21 dient der Spreader 22 der an der Katze 23 aufgehängt ist Die mit ihrem Schienenfahrwerk 23.1 verfahrbare Katze 23 nimmt, in der hier dargestellten Situation, eine mittlere Position ein. Das Eigengewicht der Vertikalhubvorrichtung 13 wird durch ein mit den Lastseilen 24 gekoppeltes mobiles Gegengewicht 33 mindestens teilweise kompensiert, damit ist eine entsprechende Reduzierung der Antriebsleistung machbar.

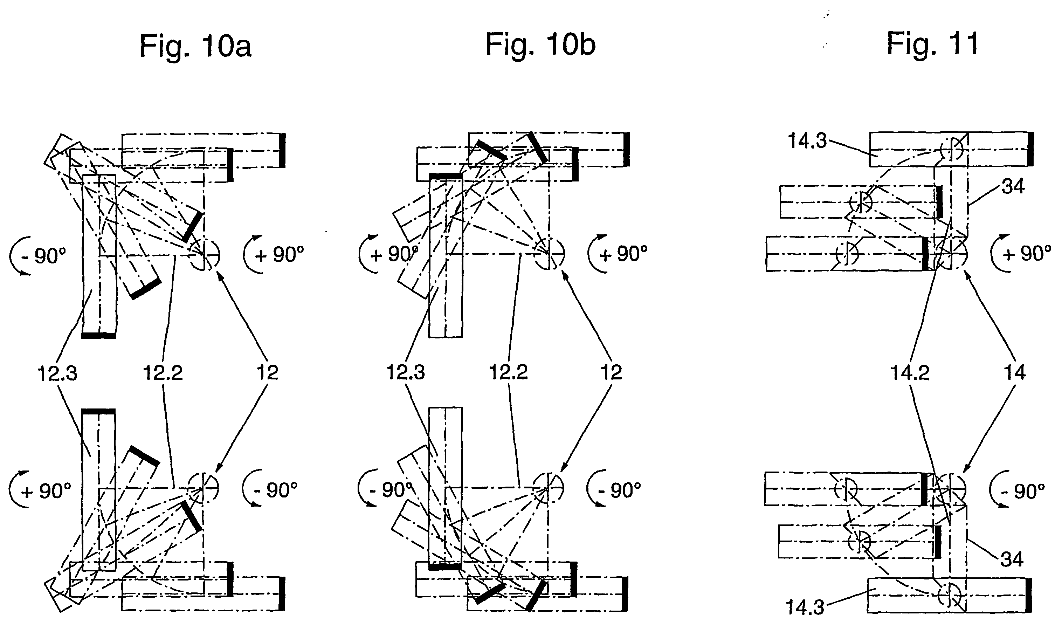

Die Figuren 10a und 10b zeigen in schematischer Darstellung den Schwenkvorgang der Schwenkeinrichtung 12 ausgehend von einer 0°-Position, d. h. der Schwenkarm 12.2 steht parallel zum seeseitigen Schwenkausleger 1.5. Die Konstruktion der Schwenkeinrichtung 12 ist so gestaltet, dass zwei antriebstechnisch unabhängige, aber koordiniert operierende Schwenkwerke den Schwenkvorgang bestimmen. Das erste Schwenkwerk schwenkt den Schwenkarm 12.2 um +90° oder -90°. Die Schwenkbewegung zur Schienenfahrbahn 7 oder 8 ist, gesteuert und überwacht durch eine übergeordnete Terminallogik, durch die nachfolgende Operation der Horizontaltransportvorrichtung 9 oder 10 (Container Mover) festgelegt. Der Schwenkarm 12.2 dient dazu, den Tragrahmen 12.3 und damit auch den Container zusätzlich um +90° oder -90° um seine Vertikalachse zu drehen. Mit dieser Zusatzfunktion der Schwenkeinrichtung 12 kann bei Bedarf das Bedienpersonal der Umschlaganlage die Ausrichtung der Containertüren oder der stark markierten Stirnseiten des Containers durchführen.

Die Figur 11 zeigt in schematischer Darstellung den Schwenkvorgang der Schwenkeinrichtung 14 ausgehend von einer 90° Position, d. h. der Schwenkarm 14.2 steht um 90° verschwenkt zur Längsachse der Umschlaganlage und der Tragrahmen 14.3 steht parallel zur Schienenfahrbahn 7 bzw. 8. Die Konstruktion der Schwenkeinrichtung 14 ist so gestaltet, dass nur ein Schwenkwerk den Schwenkvorgang bestimmt. Das Schwenkwerk schwenkt den Schwenkarm 14 um +90° oder -90°. Die Schwenkrichtung zur Schienenfahrbahn 7 oder 8 ist, gesteuert und überwacht durch eine übergeordnete Terminallogik, durch die nachfolgenden Operationen der Horizontaltransportvorrichtung 9 oder 10 festgelegt Durch ein parallelogrammartiges Koppelgetriebe 34, das zwischen Lagersäule und Tragrahmen angeordnet ist, verändert der zwangsgeführte Tragrahmen seine Ausrichtung nicht. Das gilt somit auch für die in der Schwenkeinrichtung 12 bestimmte Lage der Containertüren bzw. der stark markierten Stirnseiten der Container.

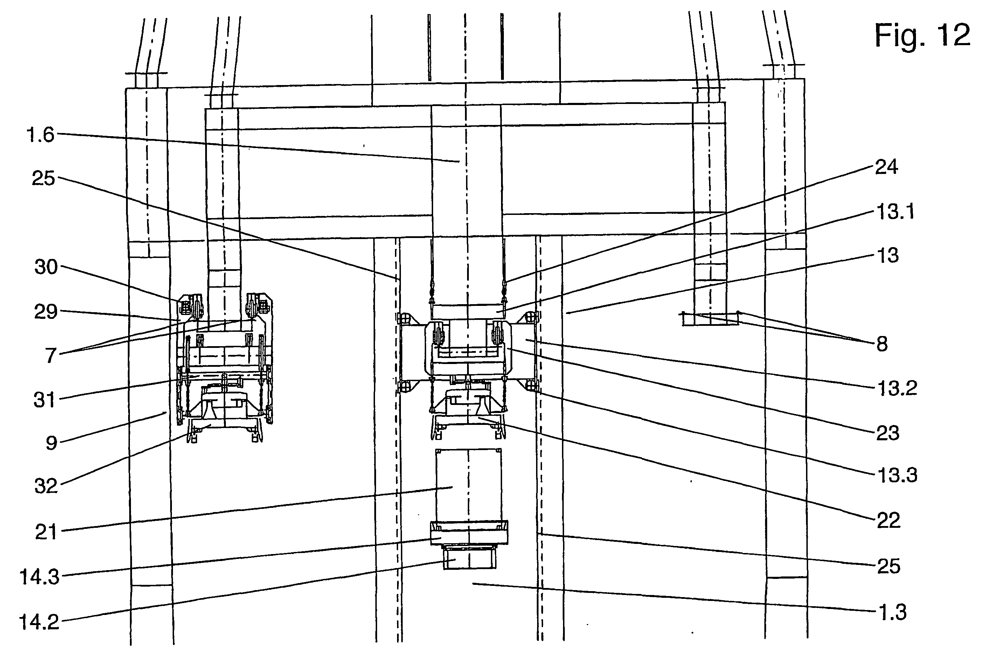

Die Figur 12 zeigt in einer rückwärtigen Ansicht, d. h. in Blickrichtung vom Kai 2 zur See, die Umschlaganlage. In der hier dargestellten Figur befinden sich der Schwenkarm 14.2 und der Tragrahmen 14.3 inklusive Last 21 in einer 0° Position, d. h. parallel zur Längsachse des landseitigen Auslegers 1.6.

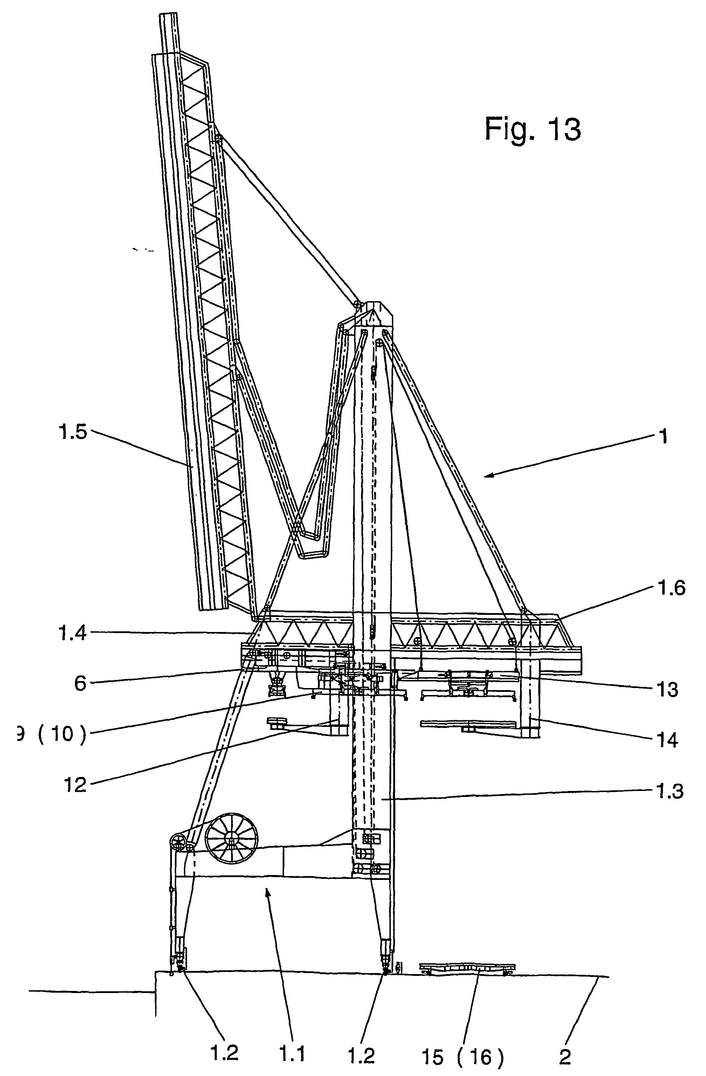

In Figur 13 schließlich ist die erfindungsgemäße Umschlaganlage 1 in der "Außer Betrieb-Stellung" dargestellt. Alle Umschlageinrichtungen, wie die Katze 6 mit der Schwenkeinrichtung 12, die Horizontaltransportvorrichtungen 9 und 10, die Vertikalhubvorrichtung 13, die Schwenkeinrichtung 14 und die Containerladestationen 15 und 16 befinden sich im "Außer Betrieb-Modus". Dementsprechend sind die Katze 6 und die Horizontaltransportvorrichtungen 9 und 10 auf den starren seeseitigen Ausleger 1.5 verfahren und der schwenkbare seeseitige Ausleger 1.4 hochgeschwenkt.

Nachfolgend wird ein Schiffsentladevorgang beschrieben; die Schiffsbeladung verläuft sinngemäß in umgekehrter Reihenfolge.

Die neuartige Umschlaganlage ist so konzipiert, dass für einen Ladevorgang am Schiff 3 die Katze 6 nur noch zur Positionierung oberhalb der Container 19, vorzugsweise ISO-Container, über kurze Strecken horizontal verfahren wird. Mit dem Spreader 20 als Lastaufnahmemittel wird der Container 19 aus dem Schiff 3 auf eine maximale Hubhöhe angehoben. Die Schwenkeinrichtung 12 schwenkt aus der +90° oder -90° Position in die 0° Position. Der Container 19 wird auf dem Tragrahmen 12.3 abgesetzt, die Schwenkeinrichtung 12 schwenkt danach aus der 0° Position in die -90° Position, d. h. in Richtung der einen Horizontaltransportvorrichtung 9 oder in die +90° Position, d. h. in Richtung der anderen Horizontaltransportvorrichtung 10. An dieser Stelle übemimmt der Spreader 32 der Horizontaltransportvorrichtung 9 oder 10 den Container 19 und transportiert ihn horizontal in Richtung des landseitigen Auslegers 1.6. Das Seilhubwerk der Katze 6 kann gleichzeitig und unabhängig von dieser Aktion den nächsten Hub tätigen. Am Ende des landseitigen Auslegers 1.6 befindet sich die vorstehend beschriebene zweite Schwenkeinrichtung 14 mit Tragsäule 14.1, Schwenkarm 14.2 sowie Tragrahmen 14.3. Dort endet der Horizontaltransport jeder Horizontaltransportvorrichtung 9 oder 10. Der Tragrahmen 14.3 der Schwenkeinrichtung 14 befindet sich unterhalb einer der beiden Horizontaltransportvorrichtungen 9 oder 10, so dass diese mit seiner Hubeinrichtung 31 den Container 19 auf den Tragrahmen 14.3 absetzen kann. Den nächsten Teil des Ladevorgangs nach unten übemimmt die Vertikalhubvorrichtung 13 auf der landseitig zugewandten Seite der turmartigen Vertikalstütze 1.3. Die Schwenkeinrichtung 14 schwenkt nun aus der +90° oder -90° Position in die 0° Position und der Container befindet sich dann unter der Vertikalhubvorrichtung 13. Die Vertikalhubvorrichtung 13 übemimmt mit ihrem Spreader 22 den Container und hebt ihn an. Die Schwenkeinrichtung 14 schwenkt wieder aus der 0° Position zurück in die +90° Position, d. h. in Richtung der einen Schienenfahrbahn 7 oder in die -90° Position, d. h. in Richtung der anderen Schienenfahrbahn 8. Nun senkt die Vertikalhubvorrichtung 13 den Container bis in eine bereitstehende Containerladestation 15, 16 auf dem Kai 2 ab. Sobald der Beladevorgang der Containerladestation 15, 16 abgeschlossen ist, erfolgt der horizontale Positionswechsel der Stationen in die entsprechende Ladeposition der anderen Station. Hier erfolgt die Übergabe der Last auf ein horizontales Transportsystem, was ein führerloses Transportfahrzeug 17 oder ein anderes Transportsystem sein kann, das den Container mittels eines Spreaders selbsttätig aufnehmen kann. Die führerlosen Transportfahrzeuge 17verbinden die neuartige Umschlaganlage z. B. mit einem automatischen Containerlager.

### Bezugszeichenliste

- 1: Umschlaganlage
- 1.1: Portal
- 1.2: Schienenfahrwerk
- 1.3: Vertikalstütze
- 1.4: seeseitiger Basisausleger
- 1.5: seeseitiger Schwenkausleger
- 1.6: Iandseitiger Ausleger
- 1.7: Querträger
- 2: Kai
- 3: Containerschiff
- 4: Seilwinden und Antriebanlage
- 5: Schienenfahrbahn
- 6: Katze
- 7: Schienenfahrbahn
- 8: Schienenfahrbahn
- 9: Horizontaltransportvorrichtung
- 10: Horizontaltransportvorrichtung
- 11: seeseitige Hub- und Senkeinrichtung für Container
- 12: Schwenkeinrichtung
- 12.1: Tragsäule
- 12.2: Schwenkarm
- 12.3: Tragrahmen
- 13: landseitige Hub- und Senkeinrichtung für Container
- 13.1: Hubtraverse
- 13.2: Balancier
- 13.3: Rollenführung
- 14: Schwenkeinrichtung
- 14.1: Tragsäule
- 14.2: Schwenkarm
- 14.3: Tragrahmen
- 15: Containerladestation
- 15.1: Chassis
- 15.2: Schienenfahrwerken
- 16: Containerladestation
- 16.1: Chassis
- 16.2: Schienenfahrwerken
- 17: fahrerloses Transportfahrzeug (FTF)
- 18: Container
- 19: Container
- 20: Spreader
- 21: Container
- 22: Spreader
- 23: Katze
- 23.1: Schienenfahrwerk
- 24: Lastseil
- 25: Führungsbahnen
- 26.1: Container
- 26.2: Container
- 27: Schienen
- 28: Schienen
- 29: Rahmen
- 30: Schienenfahrwerk
- 31: Hubwerk
- 32: Spreader
- 33: Gegengewicht
- 34: Koppelgetriebe

## Patentansprüche

1. Umschlaganlage, insbesondere zum Be- und Entladen von ISO-Containem aus Containerschiffen in Seehäfen, mit einer sich landseitig abstützenden Vertikalstütze, an der ein Horizontalausleger abgespannt ist, der seeseitig das zu entladende Schiff überkragt und an dem eine Horizontaltransportvorrichtung verfahrbar ist, die mit land- und seeseitigen sowie an dem Horizontalausleger angeordneten Hub- und Senkeinrichtungen zum Aufnehmen und Absetzen der Container zusammenwirkt,
**dadurch gekennzeichnet,**
**dass** an dem Horizontalausleger (1.4, 1.5, 1.6) mindestens zwei Horizontaltransportvorrichtungen (9, 10) angeordnet sind, die unabhängig voneinander nebeneinander angeordnete zwischen den land- und seeseitigen Hub-und Senkeinrichtungen (11, 13) an dem Horizontalausleger (1.4, 1.5, 1.6) entlang verfahrbar sind.

2. Umschlaganlage nach Anspruch 1, **dadurch gekennzeichnet, dass** an dem Horizontalausleger (1.4, 1.5, 1.6) jeweils im Bereich der land- und/oder seeseitigen Hub- und Senkeinrichtungen (11, 13) Zwischenspeichervorrichtungen (12,14) angeordnet sind, in die Container von den land- oder seeseitigen Hub- und Senkeinrichtungen (11, 13) sowie den Horizontaltransportvorrichtungen (9, 10) abstellbar oder von diesen aufnehmbar sind.

3. Umschlaganlage nach Anspruch 1 oder 2, **dadurch gekennzeichnet, dass** der Horizontalausleger in einen seeseitigen starren Basisausleger (1.4), einen daran angeschlossenen seeseitigen Schwenkausleger (1.5) und einen landseitigen auskragenden starren Ausleger (1.6) unterteilt ist, der seeseitige starre Basisausleger (1.4) und der landseitige starre Ausleger (1.6) an der Vertikalstütze (1.3) befestigt sind und der seeseitige starre Basisausleger (1.4) in der Ruheposition der Umschlaganlage, in der der seeseitige Schwenkausleger (1.5) nach oben geschwenkt ist, die seeseitige Hub- und Senkeinrichtung (11) aufnimmt.

4. Umschlaganlage nach einem der Ansprüche 1 bis 3, **dadurch gekennzeichnet, dass** der seeseitige Teil (1.4, 1.5) des Horizontalauslegers eine Schienenfahrbahn (5) für eine Katze (6) der seeseitigen Hub- und Senkeinrichtung (11) trägt, an dem landseitigen Teil (1.6) des Horizontalauslegers die landseitige Hub- und Senkeinrichtung (13) befestigt ist und beidseitig neben der Schienenfahrbahn (5) der seeseitigen Heb- und Senkeinrichtung (11) und neben der landseitigen Hub- und Senkeinrichtung (13) und somit im Wesentlichen entlang des gesamten Horizontalausleger (1.4, 1.5. 1.6) Schienenfahrbahnen (7, 8) für die Horizontaltransportvorrichtungen (9, 10) angeordnet sind.

5. Umschlaganlage nach Anspruch 4, **dadurch gekennzeichnet, dass** die Vertikalstütze (1.3) in der Art turmartig ausgebildet ist, dass die Schienenfahrbahn (5) für die Hub- und Senkeinrichtung (11) im Bereich der Vertikalstütze (1.3) endet und dass die Schienenfahrbahnen (7, 8) für die Horizontaltransportvorrichtungen (9, 10) seitlich an der Vertikalstütze (1.3) vorbei verlaufen.

6. Umschlaganlage nach einem der Ansprüche 2 bis 5, **dadurch gekennzeichnet, dass** die Zwischenspeichervorrichtungen (12, 14) jeweils eine sich nach unten erstreckende Tragsäule (12.1, 14.1) umfassen, an deren unterem Ende sich ein horizontaler Schwenkarm (12.2, 14.2) anschließt, auf dessen der Tragsäule (12.1, 14.1) abgewandten Ende schwenkbar ein Tragrahmen (12.3, 14.3) befestigt ist, der zum Aufnehmen oder Abgeben eines Containers (19) sowohl in den Bereich unterhalb der seeseitigen beziehungsweise landseitigen Hub- und Senkeinrichtung (11, 13) wie in den Bereich der beiden Horizontaltransportvorrichtungen (9, 10) in entsprechende Übernahme- bzw. Übergabepositionen verschwenkbar ist.

7. Umschlaganlage nach Anspruch 6, **dadurch gekennzeichnet, dass** der seeseitige Schwenkarm (12.2) und der seeseitige Tragrahmen (12.3) jeweils unabhängig voneinander um mindestens ± 90° um ihre vertikalen Achsen verschwenkbar sind.

8. Umschlaganlage nach Anspruch 6 oder 7, **dadurch gekennzeichnet, dass** die Verschwenkeinrichtung des landseitigen Tragarmes (14.2) und/oder des landseitigen Tragrahmens (14.3) durch ein parallelogrammartiges Koppelgetriebe (34) derartig antreibbar sind, dass die Ausrichtung des Containers (21) während der Verschwenkbewegung unverändert bleibt.

9. Umschlaganlage nach einem der Ansprüche 6 bis 8, **dadurch gekennzeichnet, dass** der Tragrahmen (12.3, 14.3) für den Container (19, 21) zwischen den beiden Übernahme- bzw. Übergabepositionen im Bereich der Schienenfahrbahnen (7, 8) in eine zentrale Schwenkstellung verschwenkbar ist, in der der Container (19, 21) mit der seeseitigen beziehungsweise der landseitigen Hub- und Senkeinrichtung (11) verbindbar oder von diesem lösbar ist

10. Umschlaganlage nach einem der Ansprüche 1 bis 9, **dadurch gekennzeichnet, dass** die Horizontaltransportvorrichtungen (9, 10) jeweils aus einem Rahmen (29) mit einem auf den Schienenfahrbahnen (7, 8) verfahrbaren Schienenfahrwerk (30), einem Hubwerk (31) und einem Spreader (32) zur Aufnahme des unter den Spreader (32) geschwenkten und positionierten Containers (19) besteht.

11. Umschlaganlage nach einem der Ansprüche 1 bis 10, **dadurch gekennzeichnet, dass** die landseitige Hub- und Senkvorrichtung (13) als an der Vertikalstütze (1.3) geführter Lift ausgebildet ist, die aus einer an einem horizontalen. Hubtraverse (13.1) geführten Katze (23) mit einem Lastaufnahmemittel (22) für den Container (21) besteht, wobei der Hubtraverse (13.1) an Hubseilen (24) aufgehängt und gelenkig mit einer Traverse (Balancier 13.2) an einer Rollenführung (13.3) verbunden ist, die an der Vertikalstütze (1.3) abrollbar geführt ist.

12. Umschlaganlage nach Anspruch 11, **dadurch gekennzeichnet, dass** die Hubseile (24) der landseitigen Hub- und Senkvorrichtung (13) zur mindestens teilweisen Kompensation des Eigengewichtes der Hub- und Senkvorrichtung (13) mit einem mobilen Gegengewicht (33) gekoppelt sind.

13. Umschlaganlage nach einem der Ansprüche 1 bis 12, **dadurch gekennzeichnet, dass** unterhalb der landseitigen Hub- und Senkvorrichtung (13) eine Ladestation (15, 16) angeordnet ist, die zwei wechselweise unter die Hub- und Senkeinrichtung (13) verfahrbare Übernahme- beziehungsweise Übergabepositionen aufweist, die mit einem horizontalen Transportsystem (17) zusammenwirken.

14. Umschlaganlage nach einem der Ansprüche 1 bis 13, **dadurch gekennzeichnet, dass** die Umschlaganlage (1) einen portalartigen, auf Schienenfahrwerken (1.2) abgestützten Unterbau (1.1) aufweist, der Ausleger (1.6) landseitig über den Unterbau (1.1) hinausragt und auf dem Unterbau (1.1) sich landseitig zentral die Vertikalstütze (1.3) abstützt.

15. Verfahren zum Be- und Entladen von Containern aus Containerschiffen mittels einer Umschlaganlage (1), insbesondere nach einem oder mehreren der Ansprüche 1 bis 16, mit einer sich landseitig abstützenden Vertikalstütze (1.3), an der ein Horizontalausleger (1.4, 1.5 und 1.6) abgespannt ist, der seeseitig das zu entladende Schiff (3) überkragt und an dem eine Horizontaltransportvorrichtung (9, 10) verfahrbar ist, die mit land- und seeseitigen sowie an dem Horizontalausleger (1.4, 1.5 und 1.6) angeordneten Hub- und Senkeinrichtungen (9, 10) zum Aufnehmen und Absetzen der Container (18, 19, 21) zusammenwirken, mit mindestens zwei an dem Horizontalausleger (1.4, 1.5, 1.6) angeordneten Horizontaltransportvorrichtungen (9, 10), die unabhängig voneinander zwischen den land- und seeseitigen Hub- und Senkeinrichtungen (11, 13) an dem Horizontalausleger (1.4, 1.5, 1.6) entlang verfahrbar sind und mit jeweils im Bereich der land- und/oder seeseitigen Hub- und Senkeinrichtungen (11, 13) an dem Horizontalausleger (1.4, 1.5, 1.6) angeordneten Zwischenspeichervorrichtungen (12, 14), in die Container von den land- oder seeseitigen Hub- und Senkeinrichtungen (11, 13) sowie den Horizontaltransportvorrichtungen (9, 10) abstellbar oder von diesen aufnehmbar sind, **gekennzeichnet durch** die Abfolge der folgenden Arbeitsschritte:
a) zum Entladen aus einem an einem Kai (2) festgemachten Containerschiff (3) wird ein Container (18, 19, 21) von einem Spreader (20) der über dem Container (18, 19, 21) am Horizontalausleger (1.4, 1.5 und 1.6) positionierten seeseitigen Hub- und Senkeinrichtung (11) aufgenommen und auf eine maximale Hubhöhe angehoben,
b) die an der seeseitigen Hub- und Senkeinrichtung (11) angeordnete Zwischenspeichervorrichtung mit einem horizontal schwenkbaren Tragarm (12.2) und einem hieran angeordneten horizontal schwenkbaren Tragrahmen (12.3) wird aus ihrer Ruheposition unterhalb einer Schienenfahrbahn (7, 8) der beiden Horizontaltransportvorrichtungen (9, 10) in eine Position unterhalb des Containers (18, 19, 21) geschwenkt,
c) der Container (18, 19, 21) wird auf den Tragrahmen (12.3) abgesetzt und mit diesem unter eine der beiden Schienenfahrbahnen (7, 8) der Horizontaltransportvorrichtungen (9, 10) verschwenkt,
d) eine der über dem Container (18, 19, 21) auf dem Tragrahmen (12.3) positionierte Horizontaltransportvorrichtung (9, 10) übernimmt den Container (18, 19, 21) und transportiert ihn zum Ende des landseitigen Auslegers (1.6), während die seeseitige Hub- und Senkeinrichtung (11) einen neuen Container (18, 19, 21) aufnimmt,
e) am landseitigen Ende des Auslegers (1.6) wird der Container (18, 19, 21) auf einen Tragrahmen (14.3) einer zweiten eine sich nach unten erstreckende Tragsäule (14.2) aufweisende Zwischenspeichereinrichtung (14) übergeben, der mit einem horizontalen Schwenkarm (14.1) in den Bereich der Schienenfahrbahnen (7, 8) der Horizontaltransportvorrichtungen (9, 10) unterhalb des Containers (18, 19, 21) verschwenkt wurde,
f) nach Lösen des Containers (18, 19, 21) von der Horizontaltransportvorrichtung (9, 10) wird der Tragrahmen (14.3) mit dem Container (18, 19, 21) unter das Hubwerk der am landseitigen Ausleger (1.6) angelenkten Hub- und Senkeinrichtung (13) verschwenkt, wo der Container (18, 19, 21) von einem Spreader (22) aufgenommen wird,
g) nach Zurückschwenken des Tragrahmens (14.3) wird der Container (18, 19, 21) mit der Hub- und Senkeinrichtung (13) abgesenkt und an ein horizontales Transportsystem (15, 16) am Boden übergeben,
h) zeitgleich mit den vorstehend beschriebenen Arbeitsschritten wird ein von der seeseitigen Hub- und Senkvorrichtung (11) aufgenommener zweiter Container (18, 19, 21) mit der zweiten Horizontaltransportvorrichtung (9, 10) über deren jeweils andere Schienenfahrbahn (7, 8) zum landseitigen Auslegerende (1.6) transportiert und dort in gleicher Weise manipuliert und
i) zum Beladen die vorgenannten Arbeitsschritte in umgekehrter Reihenfolge ausgeführt werden.

16. Verfahren nach Anspruch 15, **dadurch gekennzeichnet, dass** der beim Aufnehmen von der ersten seeseitigen Hub- und Senkeinrichtung (11) quer zur Auslegerlängsachse ausgerichtete Container (18, 19, 21) durch Verschwenken des Tragarmes (12.2) und/oder Tragrahmens (12.3) um ± 90° in eine vorherbestimmte Lage parallel zum Ausleger (1.4, 1.5, 1.6) verschwenkt wird.

17. Verfahren nach Anspruch 15 oder 16, **dadurch gekennzeichnet, dass** der beim Absetzen auf den Tragrahmen (14.3) der zweiten landseitigen Hub- und Senkeinrichtung (13) parallel zum Ausleger (1.4, 1.5, 1.6) ausgerichtete Container (18, 19, 21) beim Verschwenken in den Bereich der Hub- und Senkeinrichtung (13) durch gegenläufige Schwenkbewegungen von Tragarm (14.2) und Tragrahmen (14,3) in seiner Ausrichtung unverändert verbleibt.

## Claims

1. Cargo handling facility, in particular for loading and unloading ISO containers from container ships in sea ports, having a vertical stanchion which is supported on the land side and on which a horizontal jib is anchored which, on the sea-side, projects over the ship to be unloaded and on which a horizontal transport device can travel which cooperates with land-side and sea-side lifting and lowering devices disposed on the horizontal jib for receiving and setting down the containers,
**characterised in that**
at least two horizontal transport devices (9, 10) which are disposed next to each other are disposed on the horizontal jib (1.4, 1.5, 1.6) and can travel independently of each other between the land-side and sea-side lifting and lowering devices (11, 13) along the horizontal jib (1.4, 1.5, 1.6).

2. Cargo handling facility as claimed in claim 1, **characterised in that** on the horizontal jib (1.4, 1.5, 1.6), in the region of the land-side and/or sea-side lifting and lowering devices (11, 13) respectively, intermediate storage devices (12, 14) are disposed, into which containers can be set down from or received by the land-side or sea-side lifting and lowering devices (11, 13) and the horizontal transport devices (9, 10).

3. Cargo handling facility as claimed in claim 1 or 2, **characterised in that** the horizontal jib is divided into a sea-side rigid base jib (1.4), a sea-side pivot j ib (1.5) attached thereto and a land-side projecting rigid jib (1.6), the sea-side rigid base jib (1.4) and the land-side rigid jib (1.6) are attached to the vertical stanchion (1.3), and the sea-side rigid base jib (1.4) receives the sea-side lifting and lowering device (11) when the cargo handling facility is in the inoperative position in which the sea-side pivot jib (1.5) is pivoted upwards.

4. Cargo handling facility as claimed in any one of claims 1 to 3, **characterised in that** the sea-side part (1.4, 1.5) of the horizontal jib supports a rail track (5) for a trol ley (6) of the sea-side lifting and lowering device (11), the land-side lifting and lowering device (13) is attached to the land-side part (1.6) of the horizontal jib, and rail tracks (7, 8) for the horizontal transport devices (9, 10) are disposed on both sides next to the rail track (5) of the sea-side lifting and lowering device (11) and next to the land-side lifting and lowering device (13) and therefore substantially along the whole horizontal jib (1.4, 1.5, 1.6).

5. Cargo handling facility as claimed in claim 4, **characterised in that** the vertical stanchion (1.3) is formed in a tower-like manner, that the rail track (5) for the lifting and lowering device (11) terminates in the region of the vertical stanchion (1.3) and that the rail tracks (7, 8) for the horizontal transport devices (9, 10) extend laterally past the vertical stanchion (1.3).

6. Cargo handling facility as claimed in any one of claims 2 to 5, **characterised in that** the intermediate storage devices (12, 14) each comprise a downwardly extending support column (12.1, 14.1) to the lower end of which a horizontal pivot arm (12.2, 14.2) is connected, on the end of which remote from the support column (12.1, 14.1) a support frame (12.3, 14.3) is pivotably attached which can pivot both into the region below the sea-side or land-side lifting and lowering device (11, 13) and into the region of the two horizontal transport devices (9, 10) into corresponding transfer positions in order to receive or set down a container (19).

7. Cargo handling facility as claimed in claim 6, **characterised in that** the sea-side pivot arm (12.2) and the sea-side support frame (12.3) can pivot in each case independently of each other by at least ± 90° about their vertical axes.

8. Cargo handling facility as claimed in claim 6 or 7, **characterised in that** the pivot device of the land-side support arm (14.2) and/or of the land-side support frame (14.3) can be driven by a parallelogram-like coupler gear mechanism (34) in such a way that the alignment of the container (21) remains unchanged during the pivot movement.

9. Cargo handling facility as claimed in any one of claims 6 to 8, **characterised in that** the support frame (12.3, 14.3) for the container (19, 21) can pivot into a central pivot position between the two transfer positions in the region of the rail tracks (7, 8), in which central pivot position the container (19, 21) can be connected to or released from the sea-side or land-side lifting and lowering device (11).

10. Cargo handling facility as claimed in any one of claims 1 and 9, **characterised in that** the horizontal transport devices (9, 10) each consist of a frame (29) with a rail travelling mechanism (30), which can travel on the rail tracks (7, 8), a lifting mechanism (31) and a spreader (32) for receiving the container (19) pivoted and positioned below the spreader (32).

11. Cargo handling facility as claimed in any one of claims 1 to 10, **characterised in that** the land-side lifting and lowering device (13) is formed as a lift which is guided on the vertical stanchion (1.3) and consists of a trolley (23) guided on horizontal lifting cross-piece (13.1) and having a load-receiving means (22) for the container (21), wherein the lifting cross-piece (13.1) is suspended on lifting cables (24) and is connected in an articulated manner to a cross-piece (balancing beam 13.2) on a roller guide (13.3) which is guided in a rolling manner on the vertical stanchion (1.3).

12. Cargo handling facility as claimed in claim 11, **characterised in that** the lifting cables (24) of the land-side lifting and lowering device (13) are coupled to a mobile counterweight (33) for at least partial compensation of the intrinsic weight of the lifting and lowering device (13).

13. Cargo handling facility as claimed in any one of claims I to 12, **characterised in that** below the land-side lifting and lowering device (13) a loading station (15, 16) is disposed which has two transfer positions which can travel alternately under the lifting and lowering device (13) and which cooperate with a horizontal transport system (17).

14. Cargo handling facility as claimed in any one of claims 1 to 13, **characterised in that** the cargo handling facility (1) has a gantry-like substructure (1.1) supported on rail travelling mechanisms (1.2), the jib (1.6) projects over the substructure (1.1) on the land side and the vertical stanchion (1.3) is supported centrally on the substructure (1.1) on the land side.

15. Method for loading and unloading containers from container ships by means of a cargo handling facility (1), in particular as claimed in any one or several of claims 1 to 16, having a vertical stanchion (1.3) which is supported on the land side and on which a horizontal jib (1.4, 1.5 and 1.6) is anchored which, on the sea-side, projects over the ship (3) to be unloaded and on which a horizontal transport device (9, 10) can travel which cooperates with land-side and sea-side lifting and lowering devices (9, 10) disposed on the horizontal jib (1.4, 1.5 and 1.6) for receiving and setting down the containers (18, 19, 21), having at least two horizontal transport devices (9, 10) which are disposed on the horizontal jib (1.4, 1.5, 1.6) and can travel independently of each other between the land-side and sea-side lifting and lowering devices (11, 13) along the horizontal jib (1.4, 1.5, 1.6), and having, in the region of the land-side and/or sea-side lifting and lowering devices (11, 13) respectively, intermediate storage devices (12, 14) which are disposed on the horizontal jib (1.4, 1.5, 1.6) and into which containers can be set down from or received by the land-side or sea-side lifting and lowering devices (11, 13) and the horizontal transport devices (9, 10), **characterised by** the sequence of the following working steps:
a) in order to unload from a container ship (3) moored at a quay (2) a container (18, 19, 21) is received by a spreader (20) of the sea-side lifting and lowering device (11) positioned over the container (18, 19, 21) on the horizontal jib (1.4, 1.5 and 1.6), and the container is lifted to the maximum lifting height,
b) the intermediate storage device disposed on the sea-side lifting and lowering device (11), having a horizontally pivotable support arm (12.2) and a horizontally pivotable support frame (12.3) disposed thereon is pivoted out of its inoperative position below a rail track (7, 8) of the two horizontal transport devices (9, 10) into a position below the container (18, 19, 21),
c) the container (18, 19, 21) is set down on the support frame (12.3) and pivoted therewith below one of the two rail tracks (7, 8) of the horizontal transport devices (9, 10),
d) one of the horizontal transport device [sic] (9, 10) positioned over the container (18, 19, 21) on the support frame (12.3) takes the container (18, 19, 21) and transports it to the end of the land-side jib (1.6) while the sea-side lifting and lowering device (11) receives a new container (18, 19,21),
e) on the land-side end of the jib (1.6) the container (18, 19, 21) is transferred onto a support frame (14.3) of a second intermediate storage device (14) comprising a downwardly extending support column (14.2), which has been pivoted with a horizontal pivot arm (14.1) into the region of the rail tracks (7, 8) of the horizontal transport devices (9, 10) below the container (18, 19, 21),
f) after releasing the container (18, 19, 21) from the horizontal transport device (9, 10) the support frame (14.3) is pivoted with the container (18, 19, 21) below the lifting mechanism of the lifting and lowering device (13) articulated on the land-side jib (1.6) where the container (18, 19, 21) is received by a spreader (22),
g) after pivoting back the support frame (14.3) the container (18, 19, 21) is lowered with the lifting and lowering device (13) and is transferred to a horizontal transport system (15, 16) on the ground,
h) at the same time as the working steps described above a second container (18, 19, 21) received by the sea-side lifting and lowering device (11) is transported with the second horizontal transport device (9, 10) via its respective other rail track (7, 8) to the land-side jib end (1.6) and is handled in the same manner at that location and
i) for loading purposes the said working steps are carried out in reverse order.

16. Method as claimed in claim 15, **characterised in that** the container (18, 19, 21), which is aligned transverse to the longitudinal axis of the jib when being received by the first sea-side lifting and lowering device (11), is pivoted by pivoting of the support arm (12.2) and/or support frame (12.3) by ± 90° into a predetermined position in parallel with the jib (1.4, 1.5, 1.6)

17. Method as claimed in claim 15 or 16, **characterised in that** the container (18, 19, 21), which is aligned in parallel with the jib (1.4, 1.5, 1.6) when being set down on the support frame (14.3) of the second land-side lifting and lowering device (13), remains unchanged in its alignment during pivoting into the region of the lifting and lowering device (13) by oppositely directed pivot movements of the support arm (14.2) and support frame (14.3).

## Revendications

1. Installation de transbordement, en particulier pour charger et décharger des conteneurs ISO sur et hors de navires porte-conteneurs dans des ports de mer, avec un support vertical reposant sur la terre ferme, sur lequel est haubanée une flèche horizontale qui, côté mer, surplombe le bateau à décharger et sur laquelle est déplaçable un dispositif de transport horizontal, qui coopère avec des dispositifs de levage et de descente côté terre et côté mer, également agencés sur la flèche horizontale, pour prendre en charge et déposer les conteneurs,
**caractérisé en ce que**
au moins deux dispositifs de transport horizontal (9, 10) sont agencés sur la flèche horizontale (1.4, 1.5, 1.6), lesquels sont disposés côte à côte, indépendamment, entre les dispositifs de levage et de descente (11, 13) côté terre et côté mer, et sont mobiles le long de la flèche horizontale (1.4, 1.5, 1.6).

2. Installation de transbordement selon la revendication 1, **caractérisée en ce que** des dispositifs de stockage intermédiaire (12, 14) sont agencés sur la flèche horizontale (1.4, 1.5, 1.6), chaque fois dans la région des dispositifs de levage et de descente (11, 13) côté terre et/ou côté mer, dans lesquels peuvent être déposés, ou desquels peuvent être retirés des conteneurs provenant des dispositifs de levage et de descente (11, 13) côté terre ou côté mer, de même que des dispositifs de transport horizontal (9, 10).

3. Installation de transbordement selon la revendication 1 ou 2, **caractérisée en ce que** la flèche horizontale est divisée en une flèche de base (1.4) rigide, côté mer, une flèche pivotante (1.5) y reliées, côté mer, et une flèche rigide (1.6) en surplomb côté terre, la flèche de base (1.4) rigide côté mer et la flèche (1.6) rigide côté terre sont fixées au support vertical (1.3), et la flèche de base (1.4) rigide côté mer, en position de repos de l'installation de transbordement dans laquelle la flèche pivotante (1.5) côté mer est pivotée vers le haut, reçoit le dispositif de levage et de descente (11) côté mer.

4. Installation de transbordement selon l'une des revendications 1 à 3, **caractérisée en ce que** la partie côté mer (1.4, 1.5) de la flèche horizontale porte une voie ferrée (5) pour un chariot (6) du dispositif de levage et de descente (11) côté mer, le dispositif de levage et de descente (13) côté terre est fixée à la partie (1.6) côté terre de la flèche horizontale, et des voies ferrées (7, 8) pour les dispositifs (9, 10) de transport horizontal sont agencées de part et d'autre à côté de la voie ferrée (5) du dispositif de levage et de descente (11) côté mer et à côté du dispositif de levage et de descente (13) côté terre, et ainsi sensiblement le long de l'ensemble de la flèche horizontale (1.4, 1.5, 1.6).

5. Installation de transbordement selon la revendication 4, **caractérisée en ce que** le support vertical (1.3) est du type tour, **en ce que** la voie ferrée (5) pour le dispositif de levage et de descente (11) se termine dans la région du support vertical (1.3), et **en ce que** les voies ferrées (7, 8) pour les dispositifs (9, 10) de transport horizontal passent latéralement à côté du support vertical (1.3).

6. Installation de transbordement selon l'une des revendications 2 à 5, **caractérisée en ce que** les dispositifs (12, 14) de stockage intermédiaire présentent chacun une colonne de support (12.1, 14.1) s'étendant vers le bas, à l'extrémité inférieure de laquelle se raccorde un bras pivotant (12.2, 14.2) horizontal, à l'extrémité, opposée à la colonne de support (12.1, 12.2), duquel est fixé un cadre de support (12.3, 14.3) qui peut pivoter pour prendre ou déposer un conteneur (19) aussi bien dans la région en dessous du dispositif de levage et de descente (11, 13) côté mer, respectivement côté terre, que dans la région des deux dispositifs (9, 10) de transport horizontal dans des positions de prise, respectivement de dépôt correspondantes.

7. Installation de transbordement selon la revendication 6, **caractérisée en ce que** le bras pivotant (12.2) côté mer, et le cadre de support (12.3) côté mer peuvent chacun pivoter indépendamment l'un de l'autre et sur au moins ± 90° autour de leurs axes verticaux.

8. Installation de transbordement selon la revendication 6 ou 7, **caractérisée en ce que** le dispositif de pivotement du bras de support (14.2) côté terre et/ou du cadre de support (14.3) côté terre peuvent être entraînés par un mécanisme articulé (34) du type en parallélogramme, de telle sorte que l'orientation du conteneur (21) pendant le mouvement de pivotement reste inchangée.

9. Installation de transbordement selon l'une des revendications 6 à 8, **caractérisée en ce que** le cadre de support (12.3, 14.3) pour le conteneur (19, 21) peut pivoter entre les deux positions de prise et de dépôt dans la région des voies ferrées (7, 8) dans une position de pivotement centrale dans laquelle le conteneur (19, 21) peut être attaché, ou être détaché du dispositif (11) de levage et de descente côté mer, respectivement côté terre.

10. Installation de transbordement selon l'une des revendications 6 à 9, **caractérisée en ce que** les dispositifs (9, 10) de transport horizontal se composent chacun d'un cadre (29) avec un train de roulement sur rails (30) pouvant rouler sur les voies ferrées (7, 8), un mécanisme de levage (31) et un cadre de préhension 32 pour recevoir le conteneur (19) positionné et orienté en dessous du cadre de préhension (32).

11. Installation de transbordement selon l'une des revendications 1 à 10, **caractérisée en ce que** le dispositif (13) de levage et de descente côté terre est réalisé comme un pont élévateur guidé sur le support vertical (1.3), qui se compose d'un chariot (23) guidé sur une traverse de levage (13.1) horizontale, avec un moyen (22) de préhension d'une charge pour le conteneur (21), la traverse de levage (13.1) étant suspendue à des câbles de levage (24) et étant reliée de manière articulée, avec une traverse (balancier 13.2), à un guide à rouleaux (13.3) qui peut rouler sur l'appui vertical (1.3).

12. Installation de transbordement selon la revendication 11, **caractérisée en ce que** les câbles de levage (24) du dispositif de levage et de descente (13) côté terre sont couplés à un contrepoids (33) mobile pour une compensation au moins partielle du poids propre du dispositif de levage et de descente (13).

13. Installation de transbordement selon l'une des revendications 1 à 12, **caractérisée en ce qu'**un poste de chargement (15, 16) est agencé en dessous du dispositif de levage et de descente (13) côté terre, et présente deux positions de préhension, respectivement de dépôt pouvant être amenées alternativement en dessous du dispositif de levage et de descente (13), qui coopèrent avec un système de transport horizontal (17).

14. Installation de transbordement selon l'une des revendications 1 à 13, **caractérisée en ce que** l'installation de transbordement (1) présente une infrastructure (1.1) en forme de portique, s'appuyant sur des trains de roulement sur rails (1.2), la flèche (1.6) dépasse l'infrastructure (1.1) côté terre et le support vertical (1.3) s'appuie de manière centrale, côté terre, sur l'infrastructure (1.1).

15. Procédé de chargement et de déchargement de conteneurs sur et hors de navires porte-conteneurs au moyen d'une installation de transbordement (1), en particulier selon l'une ou plusieurs des revendications 1 à 14, avec un support vertical (1.3) en appui côté terre, sur lequel est haubanée une flèche horizontale (1.4, 1.5 et 1.6) qui, côté mer, surplombe le bateau (3) à décharger et sur laquelle est déplaçable un dispositif (9, 10) de transport horizontal, qui coopère avec des dispositifs de levage et de descente (9, 10) côté terre et côté mer, également agencés sur la flèche horizontale, pour saisir et déposer les conteneurs (18, 19, 21), avec au moins deux dispositifs de transport horizontal (9, 10) agencés sur la flèche horizontale (1.4, 1.5, 1.6), lesquels sont mobiles le long de la flèche horizontale (1.4, 1.5, 1.6), indépendamment l'un de l'autre entre les dispositifs de levage et de descente (11, 13) côté terre et côté mer, et avec des dispositifs de stockage intermédiaire (12, 14) agencés chacun sur la flèche verticale (1.4, 1.5, 1.6), chaque fois dans la région des dispositifs de levage et de descente (11, 13) côté terre et/ou côté mer, dans lesquels peuvent être déposés, ou desquels peuvent être retirés des conteneurs provenant des dispositifs de levage et de descente (11, 13) côté terre ou côté mer, de même que des dispositifs de transport horizontal (9, 10),
**caractérisé par** la succession des étapes suivantes:
a) un conteneur (18, 19, 21) à décharger d'un navire porte-conteneurs (3) ancré à un quai (2), est saisi par un cadre de préhension (20) du dispositif de levage et de descente (11) côté mer, disposé au dessus du conteneur (18, 19, 21) sur la flèche horizontale (1.4, 1.5 et 1.6) et est soulevé jusqu'à une hauteur de levage maximale,
b) le dispositif de stockage intermédiaire agencé sur le dispositif de levage et de descente (11) côté mer est pivoté, avec un bras de support (12.2) pivotant horizontal et un cadre de support (12.3) pivotant horizontal qui est disposé sur lui, hors de sa position de repos en dessous d'une voie ferrée (7, 8) des deux dispositifs (9, 10) de transport horizontal, dans une position en dessous du conteneur (18, 19, 21),
c) le conteneur (18, 19, 21) est largué sur le cadre de support (12.3) et est pivoté avec celui-ci en dessous de l'une des deux voies ferrées (7, 8) des dispositifs (9, 10) de transport horizontal,
d) l'un des dispositifs (9, 10) de transport horizontal positionnés au dessus du conteneur (18, 19, 21) sur le cadre de support (12.3) saisi le conteneur (18, 19, 21) et le transporte jusqu'à l'extrémité de la flèche (1.6) côté terre, pendant que le dispositif (11) de levage et de descente côté mer saisit un nouveau conteneur (18, 19, 21)
e) à l'extrémité côté terre de la flèche (1.6), le conteneur (18, 19, 21) est transféré, sur un cadre de support (14.3), à un second dispositif de stockage intermédiaire (14) présentant une colonne de support (14.2) s'étendant vers le bas, lequel a été pivoté, avec un bras pivotant horizontal (14.1), dans la région des voies ferrées (7, 8) des dispositifs (9, 10) de transport horizontal en dessous du conteneur (18, 19, 21),
f) après libération du conteneur (18, 19, 21) du dispositif (9, 10) de transport horizontal, le cadre de support (14.3) avec le conteneur (18, 19, 21) est amené par pivotement en dessous de l'appareil de levage du dispositif (13) de levage et de descente articulé sur la flèche (1.6) côté terre, là où le conteneur (18, 19, 21) est pris par un cadre de préhension (22),
g) après pivotement inverse du cadre de support (14.3), le conteneur (18, 19, 21) est pivoté avec le dispositif (13) de levage et de descente et est transféré à un système de transport horizontal (15, 16) au sol,
h) simultanément avec les étapes décrites précédemment, un second conteneur (18, 19, 21) pris par le dispositif (11) de levage et de descente côté mer est transporté avec le second dispositif (9, 10) de transport horizontal sur l'autre voie ferrée (7, 8) correspondante, jusqu'à l'extrémité de flèche (1.6) côté terre et y est manipulé de la même manière, et
i) pour le chargement, les étapes ci-dessus sont effectuées dans l'ordre inverse.

16. Procédé selon la revendication 15, **caractérisé en ce que** le conteneur (18, 19, 21) orienté perpendiculairement à l'axe longitudinal de la flèche lors de la saisie par le premier dispositif (11) de levage et de descente côté mer, est pivoté dans une position prédéterminée, parallèle à la flèche (1.4, 1.5, 1.6), par l'intermédiaire du pivotement du bras de support (12.2) et/ou du cadre de support (12.3), sur ±90°.

17. Procédé selon la revendication 15 ou 16, **caractérisé en ce que** le conteneur (18, 19, 21) orienté parallèlement à la flèche (1.4, 1.5, 1.6) lors de son largage sur le cadre de support (14.3) du second dispositif (13) de levage et de descente côté terre, conserve une orientation inchangée lors du pivotement dans la région du dispositif (13) de levage et de descente, grâce à des mouvements de pivotement en sens inverse du bras de support (14.2) et du cadre de support (14.3).
